**Europäisches Patentamt**

**European Patent Office**

**Office européen des brevets**

(19)

(11) Publication number: **0 089 433**

**B1**

(12)

# EUROPEAN PATENT SPECIFICATION

(45) Date of publication of patent specification: **17.09.86**

(51) Int. Cl.⁴: **H 01 M 10/36, H 01 M 2/38**

(21) Application number: **82301560.7**

(22) Date of filing: **24.03.82**

(54) **Secondary battery.**

(43) Date of publication of application:
**28.09.83 Bulletin 83/39**

(45) Publication of the grant of the patent:
**17.09.86 Bulletin 86/38**

(84) Designated Contracting States:
**DE FR GB IT**

(56) References cited:
**EP-A-0 029 680**
**EP-A-0 034 492**

(73) Proprietor: **Kabushiki Kaisha Meidensha**
**1-17, Ohsaki 2-chome**
**Shinagawa-ku Tokyo 141 (JP)**

(72) Inventor: **Hashimoto, Takafumi**
**B-103, 3-22-19 Asahimachi**
**Nerima-ku Tokyo (JP)**
Inventor: **Kobari, Yukio**
**4-21-11 Skimotakaido**
**Suginami-ku Tokyo (JP)**

(74) Representative: **Brock, Peter William et al**
**Michael Burnside & Partners 2 Serjeants' Inn**
**Fleet Street**
**London EC4Y 1HL (GB)**

## Description

The present invention relates to a circulating electrolyte type of a cell stack secondary battery in which the negatively active material is cadmium, zinc, lead or the like, and more particularly the invention relates to such a secondary battery designed to prevent the occurrence of any abnormal electrodeposition due to small shunt current.

Known cell stack secondary batteries of the above type generally comprise a plurality of secondary cells connected in series electrically and respective electrolytes are supplied to the negative electrode and positive electrode chambers of each secondary cell through a negative electrolyte inlet-side common manifold or a positive electrolyte inlet-side common manifold and the negative electrolyte inlet channel or the positive electrolyte inlet channel of each cell, leaving each cell through respective negative electrolyte outlet channels and positive electrolyte outlet channels and respective negative electrolyte outlet-side common manifolds and positive electrolyte outlet-side common manifolds. With secondary cells connected in series in this way, the circulation of the electrolytes is effected in a so-called parallel connection, so that a small shunt current is caused at the inlet and outlet sides of each cell via the common manifolds by the potential difference between the plurality of the cell stack positive electrodes and negative electrodes. This gives rise to the following undesirable phenomena:

(1) Shunt current loss:

A loss of heat is caused by the small shunt current through the manifolds and the channels.

(2) Inequality of quantity of charged electricity:

Due to the difference in the current value (mA) of the small shunt current flowing into and out of the channels of the respective cells, the currents flowing in the electrodes of the respective cells differ in value from one cell to another, with the result that the amount of negatively active metal electro-deposited on the negative electrode surface and/or the quantity of charged electricity differs from one cell to another.

(3) Occurrence of abnormal electrodeposition:

At the end of each negative electrode of the lower potential side respectively, into which a small current flows, even a slight shunt current causes abnormal electrodeposition due to the end concentration of the negative electrode, thus disturbing the circulation of the electrolyte on the negative electrode surface and/or causing a short-circuit between adjacent negative electrodes.

To overcome these detrimental effects, various methods have heretofore been proposed.

For instance, a method is known in the art in which the manifolds and the channels are decreased in diameter and increased in length, thus increasing the electric resistance of the electrolytes in the manifolds and the channels, and thereby decreasing the value of the shunt currents. This method does have the effect of decreasing the shunt current value and reducing some of the previously mentioned difficulties due to the shunt current, i.e., the shunt current loss and the inequality of quantity of charged electricity. Even if the shunt current value is decreased, however, the shunt current flows in the same direction during the charging period as well as the discharging period. This has the result that abnormal electrodeposition is caused as the cycle of charge and discharge is repeated, and thus the circulation of the electrolytes is impeded and/or a short-circuit is caused between the respective cells, thereby causing a short endurance to the cycle life. Further, the loss of hydrostatic pressure for the circulation of the electrolytes is increased, making it necessary to use more powerful pumps for circulating the electrolytes.

With a view to overcoming the foregoing deficiencies in the prior art, particularly the occurrence of abnormal electrodeposition without increasing the power of electrolyte circulating pumps, the present invention provides an improved secondary battery in which an auxiliary electrode is provided in and/or near each of the negative electrolyte manifolds and/or channels of each secondary cell, and each auxiliary electrode is connected to the respective associated negative electrode by means of a conductive material. Thus, small currents flowing into the negative electrode chamber of the cell are absorbed by these auxiliary electrodes, thereby preventing the occurrence of abnormal electrodeposition due to the entry of any shunt current and increasing the cycle life.

One previous use of auxiliary electrodes for the reduction of shunt currents was in EP—A—0034492 where annular protective electrodes are provided at the beginning and ending of one or more of the manifolds to supply a protective current and maintain a substantially uniform current density profile through the electrolyte along the respective manifold.

In one embodiment, the present invention provides a secondary battery in which the negatively active material is cadmium, zinc or lead and which comprises a plurality of secondary cells each having a negative electrolyte inlet channel, and negative electrolyte outlet channel for circulation of a common negative electrolyte from a common negative electrolyte inlet manifold through said secondary cells to a common negative electrolyte outlet manifold, a positive electrolyte inlet channel and a positive electrolyte outlet channel for circulation of a common positive electrolyte from a common positive electrolyte inlet manifold through said secondary cells to a common positive electrolyte outlet manifold, and auxiliary electrodes associated with said negative electrolyte inlet and outlet manifolds and in electrical contact with said negative electrolyte, characterized in that the respective auxiliary electrodes are positioned in or just outside each negative electrolyte inlet channel and negative electrolyte outlet channel of each secondary cell, each auxiliary electrode being connected to a negative electrode of a respective secondary cell by connecting means, thereby maintaining each auxiliary electrode at the same potential as its respective negative electrode.

In another embodiment, the present invention provides a secondary battery in which the negatively active material is cadmium, zinc or lead and which comprises a plurality of secondary cells each having a negative electrolyte inlet channel, and a negative electrolyte outlet channel for circulation of a common negative electrolyte from a common negative electrolyte inlet manifold through said secondary cells to a common negative electrolyte outlet manifold, a positive electrolyte inlet channel and a positive electrolyte outlet channel for circulation of a common positive electrolyte from a common positive electrolyte inlet manifold through said secondary cells to a common positive electrolyte outlet manifold, and auxiliary electrodes associated with said second inlet and outlet manifolds and in electrical contact with said positive electrolyte, characterized in that the respective negative electrolyte inlet channel and outlet channel of each secondary cell is connected to said common positive electrolyte inlet manifold and common positive electrolyte outlet manifold through a respective pipe having an ion-transmitting separator therein, and in that each auxiliary electrode is positioned on the positive electrolyte side of said respective separator and in that said each auxiliary electrode is electrically connected to a negative electrode of said respective secondary cell, thereby maintaining each auxiliary electrode at the same potential as its respective negative electrode.

The invention is further described with reference to the accompanying Drawings, in which:

Fig. 1 is a longitudinal sectional view showing an embodiment of a secondary battery according to the invention;

Figs. 2(a), (b), (c) and (d) are each a characteristic diagram comparatively showing the values of shunt current flow into the electrolyte inlet and outlet of secondary cells during the charging period, with and without the application of the invention.

Fig. 3 is a longitudinal sectional view showing another embodiment of the invention.

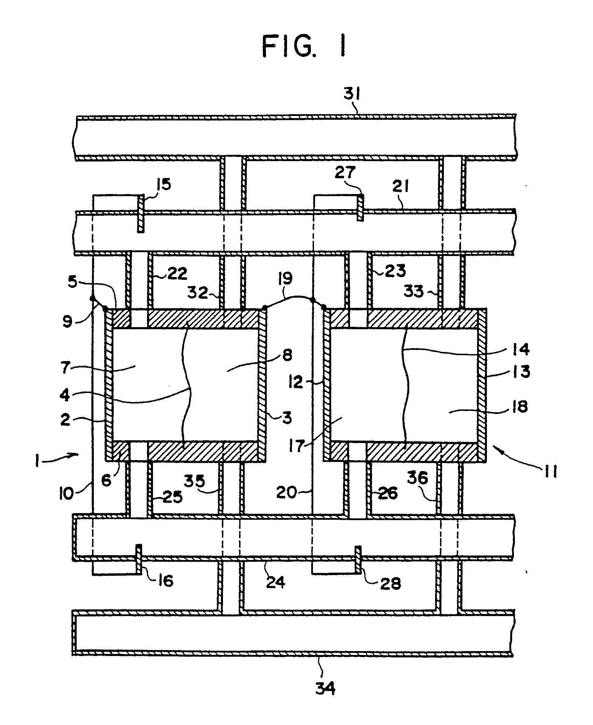

Referring to Fig. 1, numerals 1 and 11 designate secondary cells. A cell stack battery according to the invention will include, for example, 10 secondary cells connected in series, although only two cells 1 and 11 are shown in the Figure. Numeral 2 designates a negative electrode, 3 a positive electrode, and 4 a separator positioned substantially halfway between the electrodes 2 and 3. These elements are held together with bolts or the like by means of electrode frames 5 and 6. Numeral 7 designates a negative electrode chamber, 8 a positive electrode chamber, and 9 a terminal of the cell 1. The positive electrode 3 of the cell 1 is connected to a negative electrode 12 of the adjoining secondary cell 11 by a connector 19. Of course, in the case of a bipolar type cell stack battery it is only necessary to use one or the other of the positive electrode and negative electrode 3 and 12 which are of the same potential, and arrange the cells 1 and 11 in stacks.

Numeral 21 designates a negative electrolyte inlet-side common manifold, connected by respective negative electrolyte inlet channels 22 and 23 to negative electrode chambers 7 and 17. Numeral 24 designates a negative electrolyte outlet-side common manifold, connected to negative electrode chambers 7 and 17 by respective negative electrolyte outlet channels 25 and 26. Similarly, numeral 31 designates a positive electrolyte inlet-side common manifold, 32 and 33 positive electrolyte inlet channels, 34 a positive electrolyte outlet-side common manifold, and 35 and 36 positive electrolyte outlet channels. The inlet channels 22, 32, 23 and 33 and the outlet channels 25, 35, 26 and 36 run in a direction perpendicular to the cell stack direction of the electrode frames 5 and 6, and are arranged side by side along the top and bottom electrode frames 5 and 6.

The cell stack battery constructed as described above is thus far identical with the prior art battery. The negative electrolyte is introduced by a pump (not shown) via the inlet-side common manifold 21 and the inlet channels 22 and 23 into the negative electrode chambers 7 and 17 of the cells 1 and 11, and thence passes into the outlet-side common manifold 24 via the outlet channels 25 and 26. Similarly, the positive electrolyte is introduced by a pump (not shown) via the inlet-side common manifold 31 and the inlet channels 32 and 33 into the positive electrode chambers 8 and 18 of the cells 1 and 11, and thence passes into the outlet-side common manifold 34 via the outlet channels 35 and 36.

In accordance with the present invention, the cell stack battery constructed as described is further provided with auxiliary electrodes 15, 16 and 27, 28 which are respectively disposed in the electrolytes of the negative electrolyte inlet-side and outlet-side common manifolds 21 and 24. Auxiliary electrodes 15 and 16 are respectively hermetically fitted into those portions of the inlet-side common manifold 21 and the outlet-side common manifold 24 which communicate with the negative electrode chamber 7 of the end cell 1. Similarly, auxiliary electrodes 27 and 28 are respectively hermetically fitted into those portions of the inlet-side common manifold 21 and the outlet-side common manifold 24 which communicate with the negative electrode chamber 17 of the cell 11. Electrodes 15 and 16 are connected to the terminal 9 by a connector 10 and are thus held at the same potential as the negative electrode 2. Similarly, auxiliary electrodes 27 and 28 are connected to the connector 19 by a connector 20, and are thus held at the same potential as the negative electrode 12 of the cell 11.

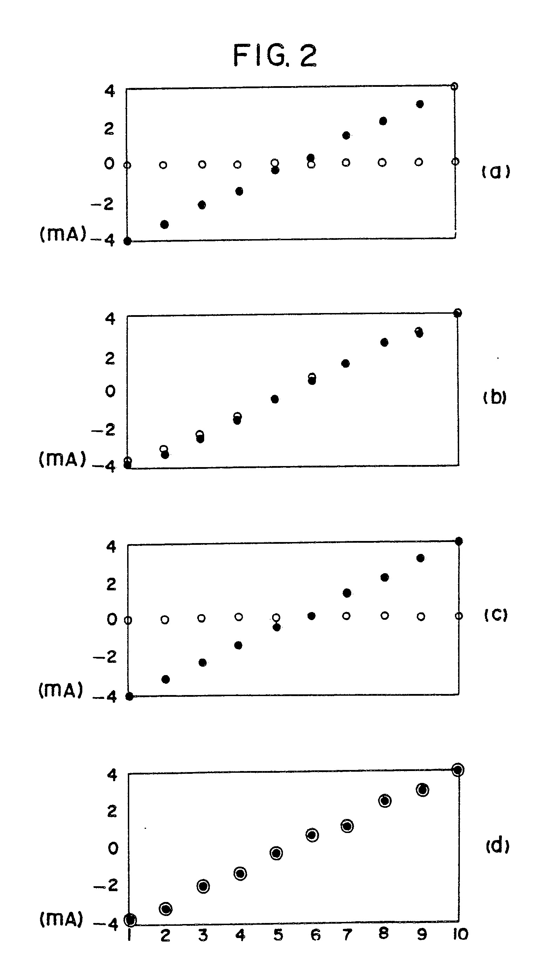

Fig. 2 illustrates characteristic diagrams showing the results of shunt current measurements on charge in instances (spots ◯) where the invention was applied to secondary batteries comprising 10 secondary cells, and instances (spots ●) where the invention was not applied, with (a) showing the currents at the negative electrolyte inlets, (b) those at the positive electrolyte inlets, (c) those at the negative electrolyte outlets and (d) those at the positive electrolyte outlets. In the characteristic diagrams, the ordinates represent the shunt current value (mA) and the positive and negative values respectively represent the shunt current flowing from the negative electrode or positive electrode chamber into the manifold through the channel and the shunt current flowing into the negative electrode or positive electrode chamber from the manifold through the channel. The abscissae represent the channel positions of the respective cells.

These tests were conducted by measuring the shunt currents of the respective channels with a clip-on ammeter and the values were measured at the expiration of 90 to 100 minutes after starting the charge with a charging voltage of 22 V and a charging current of 12 A. As will be apparent from (a) and (c) of Fig. 2, there was a small current flow into the negative electrode chambers without the application of the invention, and this small current flow was eliminated when the invention was applied.

When the tests were continued further and then the batteries were disassembled after the lapse of 25 hours through the cycles of charge and discharge to compare the electrodeposition of the zinc on the negative electrode surfaces, the occurrence of dendritic electrodeposition of the zinc on the negative electrodes near the channels was seen when the invention was not applied, and there was no such abnormal electrodeposition when the invention was applied.

While, in the embodiment described above, the auxiliary electrodes 15, 16, 27 and 28 are fitted into the inlet-side and outlet-side common manifolds 21 and 24, these auxiliary electrodes 15, 16, 27 and 28 may be respectively positioned near the inlet and outlet channels which communicate with the negative electrode chambers of the stacked secondary cells.

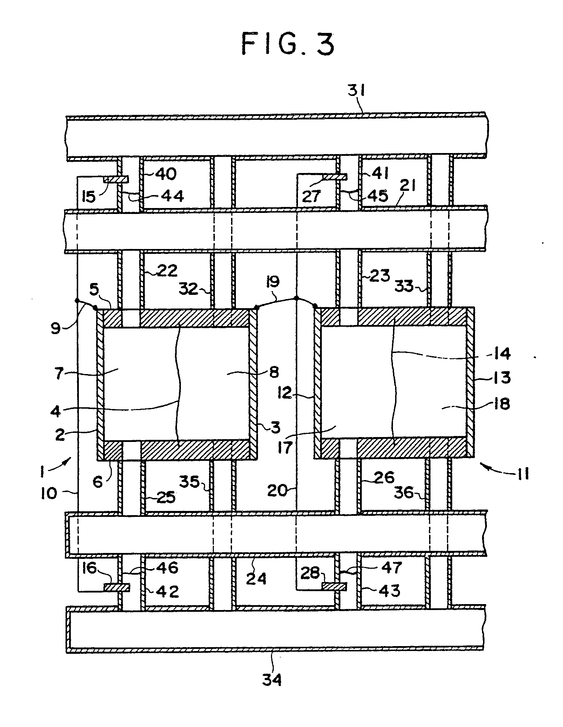

Fig. 3 shows another embodiment of the invention. This embodiment differs from the embodiment described in connection with Fig. 1 in that pipes 40 and 41 are provided near the junction points between the negative electrolyte inlet-side common manifold 21 and the negative electrolyte inlet channels 22 and 23 for connecting the negative electrolyte inlet-side common manifold 21 to the positive electrolyte inlet-side common manifold 31. Similarly, pipes 42 and 43 are provided between the negative electrolyte outlet-side common manifold 24 and the negative electrolyte outlet channels 25 and 26, for connecting the negative electrolyte outlet-side common manifold 24 to the positive electrolyte outlet-side common manifold 34. Separators 44, 45, 46 and 47 are respectively disposed in the pipes 40, 41, 42 and 43 to prevent mixing of the negative electrolyte and positive electrolyte, and the auxiliary electrodes 15, 16, 27 and 28 are respectively disposed according to the invention in the positive electrolyte in these pipes. Each of these separators transmits ions but prevents the transmission of electrolyte. More specifically, the auxiliary electrodes 15, 16, 27 and 28 are respectively hermetically fitted into the positive electrolyte side of pipes 40, 41, 42 and 43 which are separated by the separators 44, 45, 46 and 47, respectively. Auxiliary electrodes 15 and 16 are connected to the terminal 9 by the connector 10 and held at the same potential as the negative electrode 2. Auxiliary electrodes 27 and 28 are connected to the connector 19 by the connector 20 and held at the same potential as the negative electrode 12. In this way, the same effect as in the arrangement of Fig. 1 can be obtained with the arrangement of the auxiliary electrodes 15, 16, 27 and 28 shown in Fig. 3. Still further, in contrast to the first embodiment in which the auxiliary electrodes 15, 16, 27 and 28 are fitted into the negative electrolyte inlet-side and outlet-side common manifolds, the deposition of the metal of the negatively active material on the negative electrodes is prevented.

From the foregoing detailed description it will be seen that in accordance with the cell stack secondary battery of this invention the occurrence of abnormal electrodeposition can be prevented and the cycle life can be increased by virtue of the fact that an auxiliary electrode is provided just outside each of the inlet and outlet of a negative electrode chamber of each secondary battery and the potential of these auxiliary electrodes is held equal to that of the associated negative electrode, thereby absorbing the small shunt currents which cause abnormal electrodeposition.

**Claims**

1. A secondary battery in which the negatively active material is cadmium, zinc or lead and which comprises a plurality of secondary cells (1, 11) each having a negative electrolyte inlet channel (22, 23), and negative electrolyte outlet channel (25, 26) for circulation of a common negative electrolyte from a common negative electrolyte inlet manifold (21) through said secondary cells to a common negative electrolyte outlet manifold (24), a positive electrolyte inlet channel (32, 33) and a positive electrolyte outlet channel (35, 36) for circulation of a common positive electrolyte from a common positive electrolyte inlet manifold (31) through said secondary cells to a common positive electrolyte outlet manifold (34), and auxiliary electrodes (15, 16, 27, 28) associated with said negative electrolyte inlet and outlet manifolds and in electrical contact with said negative electrolyte, characterized in that the respective auxiliary electrodes (15, 16, 27, 28) are positioned in or just outside each negative electrolyte inlet channel (22, 23) and negative electrolyte outlet channel (25, 26) of each secondary cell (1, 11), each auxiliary electrode being connected to a negative electrode (2, 12) of a respective secondary cell by connecting means (10, 20), thereby maintaining each auxiliary electrode at the same potential as its respective negative electrode.

2. A secondary battery in which the negatively active material is cadmium, zinc or lead and which comprises a plurality of secondary cells (1, 11) each having a negative electrolyte inlet channel (22, 23), and a negative electrolyte outlet channel (25, 26) for circulation of a common negative electrolyte from a common negative electrolyte inlet manifold (21) through said secondary cells to a common negative electrolyte outlet manifold (24), a positive electrolyte inlet channel (32, 33) and a positive electrolyte outlet channel (35, 36) for circulation of a common positive electrolyte from a common positive electrolyte inlet manifold (31) through said secondary cells to a common positive electrolyte outlet manifold (34), and auxiliary electrodes (15, 16, 27, 28) associated with said second inlet and outlet manifolds and in electrical contact with said positive electrolyte, characterized in that the respective negative electrolyte inlet channel (22, 23) and outlet channel (25, 26) of each secondary cell (1, 11) is connected to said common positive electrolyte inlet manifold (31) and common positive electrolyte outlet manifold (34) through a respective pipe (40, 41, 42, 43) having an ion-transmitting separator (44, 45, 46, 47) therein, and in that each auxiliary electrode (15, 16, 27, 28) is positioned on the positive electrolyte side of said respective separator and in that said each auxiliary electrode is electrically connected to a negative electrode (2, 12) of said respective secondary cell, thereby maintaining each auxiliary electrode at the same potential as its respective negative electrode.

**Patentansprüche**

1. Sekundärbatterie, in der das negativ aktive Material aus Kadmium, Zink oder Blei besteht, und die eine Zahl von Sekundärzellen (1, 11) enthält, von denen jede einen Eintrittskanal (22, 23) für den negativen Elektrolyt und einen Austrittskanal (25, 26) für den negativen Elektrolyt zum Umlauf eines gemeinsamen negativen Elektrolyten aus einem gemeinsamen Eintritts-Verteilerrohr (21) für den negativen Elektrolyt durch die Sekundärzellen zu einem gemeinsamen Austritts-Verteilerrohr (24) für den negativen Elektrolyt, einen Eintrittskanal (32, 33) für den positiven Elektrolyt und einen Austrittskanal (35, 36) für den positiven Elektrolyt zum Umlauf eines gemeinsamen positiven Elektrolyten aus einem gemeinsamen Eintritts-Verteilerrohr (31) für den positiven Elektrolyt durch die Sekundärzellen zu einem gemeinsamen Austritts-Verteilerrohr (34) für den positiven Elektrolyt, sowie Hilfselektroden (15, 16, 27, 28), welche den Eintritts- und Austritts-Vertielerrohren für den negativen Elektrolyt zugeordnet sind und mit dem negativen Elektrolyt in elektrischer Berührung stehen, dadurch gekennzeichnet, daß die entsprechenden Hilfselektroden (15, 16, 27, 28) innerhalb oder unmittelbar außerhalb jedes Eintrittskanals (22, 23) und Austrittskanals (25, 26) für den negativen Elektrolyt jeder Sekundärzelle (1, 11) angeordnet sind, wobei jede Hilfselektrode an eine negative Elektrode (2, 12) der entsprechenden Sekunärzelle durch eine Verbindungseinrichtung (10, 20) angeschlossen ist, wodurch jede Hilfselektrode auf dem gleichen Potential wie ihre entsprechende negative Elektrode gehalten ist.

2. Sekundärbatterie, in der das negativ aktive Material aus Kadmium, Zink oder Blei besteht, und die eine Zahl von Sekundärzellen (1, 11) enthält, von denen jede einen Eintrittskanal (22, 23) für den negativen Elektrolyt und einen Austrittskanal (25, 26) für den negativen Elektrolyt zum Umlauf eines gemeinsamen negativen Elektrolyten aus einem gemeinsamen Eintritts-Verteilerrohr (21) für den negativen Elektrolyt durch die Sekundärzellen zu einem gemeinsamen Austritts-Verteilerrohr (24) für den negativen Elektrolyt, einen Eintrittskanal (32, 33) für den positiven Elektrolyt und einen Austrittskanal (35, 36) für den positiven Elektrolyt zum Umlauf eines gemeinsamen positiven Elektrolyten aus einem gemeinsamen Eintritts-Verteilerrohr (31) für den positiven Elektrolyt durch die Sekundärzellen zu einem gemeinsamen Austritts-Verteilerrohr (34) für den positiven Elektrolyt, sowie Hilfselektroden (15, 16, 27, 28), welche den zweiten Eintritts- und Austritts-Verteilerrohren zugeordnet sind und mit dem negativen Elektrolyt in elektrischer Berührung stehen, dadurch gekennzeichnet, daß der entsprechende Eintrittskanal (22, 23) und Austrittskanal (25, 26) für den negativen Elektrolyt jeder Sekundärzelle (1, 11) mit dem gemeinsamen Eintritts-Verteilerrohr (31) für den positiven Elektrolyt und dem gemeinsamen Austritts-Verteilerrohr (34) für den positiven Elektrolyt durch ein entsprechendes Rohr (40, 41, 42, 43) verbunden ist, in welchem ein Ionen-übertragender Scheider (44, 45, 46, 47) vorgesehen ist, und daß jede Hilfselektrode (15, 16, 27, 28) bezüglich des Scheiders auf der Seite des positiven Elektrolyten angeordnet ist, und daß jede Hilfselektrode galvanisch mit einer negativen Elektrode (2, 12) der entsprechenden Sekundärzelle verbunden ist, wodurch jede Hilfselektrode auf dem gleichen Potential wie ihre entsprechende negative Elektrode gehalten ist.

**Revendications**

1. Batterie d'accumulateurs, dans laquelle le matériau actif avec un effet négatif est du cadmium, du zinc ou du plomb et qui comporte une pluralité d'éléments accumulateurs (1, 11) dont chacun possède un conduit (22, 23) d'introduction d'un électrolyte négatif, et un conduit (25, 26) de sortie de l'électrolyte négatif, permettant la circulation d'un électrolyte négatif commun depuis un collecteur commun (21) d'entrée de l'électrolyte négatif, à travers lesdits éléments accumulateurs, jusqu'à un collecteur commun (24) de sortie de l'électrolyte négatif, un conduit (32, 33) d'entrée d'un électrolyte positif et un conduit (35, 36) de sortie de l'électrolyte positif, permettant la circulation d'un électrolyte positif commun à partir d'un collecteur commun (31) d'entrée de l'électrolyte positif, à travers lesdits éléments accumulateurs jusqu'à un collecteur commun (34) de sortie de l'électrolyte positif, et des électrodes auxiliaires (15, 16, 27, 28) associées auxdits collecteurs d'entrée et de sortie de l'électrolyte négatif et en contact électrique avec ledit électrolyte négatif, caractérisée en ce que les électrodes auxiliaires respectives (15, 16, 27, 28) sont disposées dans ou juste à l'extérieur de chaque conduit (22, 23) d'admission de l'électrolyte négatif et de chaque conduit (25, 26) de sortie de l'électrolyte négatif de chaque élément accumulateur (1, 11), chaque électrode auxiliaire étant raccordée à une électrode négative (2, 12) d'un élément accumulateur respectif grâce à des moyens de raccordement (10, 20), ce qui permet de maintenir chaque électrode auxiliaire au même potentiel que son électrode négative respective.

2. Batterie d'accumulateurs, dans laquelle le matériau actif avec un effet négatif est du cadmium, du zinc ou du plomb et qui comporte une pluralité d'éléments accumulateurs (1, 11) dont chacun possède un conduit (22, 23) d'introduction d'un électrolyte négatif, et un conduit (25, 26) de sortie de l'électrolyte négatif, permettant la circulation d'un électrolyte négatif commun depuis un collecteur commun (21) d'entrée de l'électrolyte négatif, à travers lesdits éléments accumulateurs, jusqu'à un collecteur commun (24) de sortie de l'électrolyte négatif, un conduit (32, 33) d'entrée d'un électrolyte positif et un conduit (35, 36) de sortie de l'électrolyte positif, permettant la circulation d'un électrolyte positif commun à partir d'un collecteur commun (31) d'entrée de l'électrolyte positif, à travers lesdits éléments accumulateurs jusqu'à un collecteur commun (34) de sortie de l'électrolyte positif, et des électrodes auxiliaires (15, 16, 27, 28) associées auxdits seconds collecteurs d'entrée et de sortie et en contact électrique avec ledit électrolyte négatif, caractérisée en ce que le canal respectif (22, 23) d'entrée de l'électrolyte négatif et le canal respectif de sortie (25, 26) de l'électrolyte négatif de chaque élément accumulateur (1, 11) sont raccordés audit collecteur commun (31) d'entrée de l'électrolyte positif et audit collecteur commun (34) de sortie de l'électrolyte positif par l'intermédiaire d'une canalisation respective (40, 41, 42, 43) contenant en elle un séparateur (44, 45, 46, 47) de transmission des ions, et que chaque électrode auxiliaire (15, 16, 27, 28) est disposée sur le côté, associé à l'électrolyte positif, dudit séparateur respectif et que chaque électrode auxiliaire est raccordée électriquement à une électrode négative (2, 12) dudit élément accumulateur respectif, ce qui permet de maintenir chaque électrode auxiliaire au même potentiel que son électrode négative respective.

# FIG. 1

# FIG. 2

(a)

(b)

(c)

(d)

# FIG. 3